# EUROPÄISCHE PATENTSCHRIFT

(11) **EP 2 363 313 B1**
(45) Veröffentlichungstag und Bekanntmachung des Hinweises auf die Patenterteilung: **07.05.2014**
(21) Anmeldenummer: 11001483.4
(22) Anmeldetag: 23.02.2011
(51) Int. Cl.: B60K 17/28, B62D 49/06

(54) **Nebenabtriebsvorrichtung eines mobilen Arbeitsgeräts**
Power take-off device of a mobile working machine
Dispositif d'entraînement auxiliaire d'un engin de travail mobile

(30) Priorität: 27.02.2010 DE 102010009655
(43) Veröffentlichungstag der Anmeldung: 07.09.2011
(73) Patentinhaber: Robert Bosch GmbH, 70469 Stuttgart (DE)
(72) Erfinder: Maigler, Achim, 70188 Stuttgart (DE)
(74) Vertreter: Thürer, Andreas

(56) Entgegenhaltungen:
- DE-A1- 2 813 991
- US-A- 5 601 172

## Beschreibung

Die vorliegende Erfindung betrifft eine Nebenantriebsvorrichtung eines mobilen Arbeitsgeräts wie beispielsweise eines Traktors zum Anschluss von Bearbeitungsmaschinen gemäß dem. Oberbegriff des Patentanspruchs 1 sowie ein Verfahren zum An- und/oder Abkoppeln einer Bearbeitungsmaschine an/von der Nebenantriebsvorrichtung.

Mobile Arbeitsgeräte wie Traktoren aber auch Lastkraftfahrzeuge mit Zusatzfunktionen (Zusatzaggregate) wie Winden, Krane und dergleichen Maschinen sind in der Regel mit einem Nebenantrieb ausgestattet, über den das Nebenaggregat an den Antriebsmotor (Verbrennungsmotor) des mobilen Arbeitsgeräts als Energiequelle anschließbar ist. Ein solcher Nebenantrieb hat eine sogenannte Zapfwelle, deren freies Ende zumeist mit einem Keilwellenprofil zur Übertragung eines Drehmoments ausgebildet ist und die entweder als eine gesonderte Abtriebswelle des Motors ausgebildet ist (Motorzapfwelle, die direkt mit dem Motor verbunden ist und entsprechend der Motordrehzahl läuft), eine über eine Kupplung mit dem Getriebe des mobilen Arbeitsgeräts verbindbare Ausgangswelle darstellt (Getriebezapfwelle, die über die Kupplung und dem Getriebe mit dem Motor verbunden ist und mit unterschiedlichen Nenndrehzahlen betrieben werden kann) oder als eine mit der Antriebsachse des mobilen Arbeitsgeräts verbundene Anschlusswelle vorgesehen ist (Wegezapfwelle, die mit einer Verzahnung an den Antriebsstrang der Räder gekoppelt ist, sodass die Drehzahl mit steigender Fahrgeschwindigkeit ansteigt).

In der Praxis haben sich die Getriebezapfwellen, also jene Zapfwellen, die über eine Kupplung mit dem Getriebe des Arbeitsgeräts wahlweise verbindbar sind, durchgesetzt, da diese wahlweise über die Kupplung aktivierbar/deaktivierbar sind und zudem im Gegensatz zu den mit der Antriebsachse verbundenen Zapfwellen unabhängig von der Vortriebsgeschwindigkeit des Arbeitsgeräts ein Drehmoment abgeben können.

Aus dem Stand der Technik, beispielsweise gemäß der DE 28 13 991 C2 oder der US 5,601,172 ist eine Nebenantriebsvorrichtung der Getriebezapfwellenbauart bekannt. Demzufolge ist ein Traktor als mobiles Arbeitsgerät mit einem Motorgetriebe ausgerüstet, an das eine Nebenantriebswelle ankoppelbar ist, an die wiederum ein Zusatzaggregat beispielsweise für den landwirtschaftlichen Einsatz anschließbar ist. Hierfür ist eine Kupplung vorgesehen, die in eingerücktem Zustand ein Nenndrehmoment auf die Zapfwelle übertragen kann. Die Wirkverbindung zwischen der Kupplung und dem Getriebe ist so gestaltet, dass zwei unterschiedliche Drehzahlen vom Getriebe wahlweise abgegriffen werden können. Gemäß der US 5,601,172 ist zur Betätigung der Kupplung ein Hydrauliksystem vorgesehen, das über ein elektrisches/elektronisches Steuergerät ansteuerbar ist und das mit der Kupplung fluidverbunden ist, um die Kupplung in Abhängigkeit eines Betätigungssignals durch einen Fahrer ein- und auszurücken.

Es hat sich gezeigt, dass bei Nebenantriebsvorrichtungen im allgemeinen und insbesondere der Getriebezapfwellenbauart ein Problem beim An- und Abkoppeln des Zusatzaggregats an/von der Zapfwelle dahingehend auftritt, dass sich das Keilwellenprofil der Zapfwelle zufällig in einer Drehposition befindet, in der ein Auf- oder Einstecken einer Eingangswelle des Zusatzaggregats nicht möglich ist, beispielsweise wenn die Zähne beider Wellen zueinander ausgerichtet sind (d.h. wenn die Zähne der Zapfwelle auf die Zähne der Antriebswelle des Zusatzaggregats treffen). Auch tritt häufig der Fall ein, dass bei Abkoppeln des Zusatzaggregats das Keilwellenprofil bzw. die Keilwellenverbindung nach wie vor unter (Drehmoment-) Belastung steht und sich dadurch die beiden Wellen so verspannen, dass ein Trennen der beiden Wellen unmöglich wird.

Ein manuelles Drehen der Zapfwelle auch unter Zuhilfenahme von mehr oder weniger geeignetem Werkzeug ist selbst bei ausgerückter Kupplung häufig nur schwer oder gar nicht möglich, da der Widerstand der Zapfwellenlagerung zu groß ist. Gleiches trifft in der Regel auch bei dem Zusatzaggregat zu. Daher kann die korrekte Drehposition der Zapfwelle bezüglich der Eingangswelle eines Zusatzaggregats ggf. nur schwer (zufällig) und mit größerem Zeitaufwand erreicht werden.

Grundsätzlich besteht immer die Möglichkeit, durch Einrücken der Kupplung die Zapfwelle in eine (Blind-) Drehung zu versetzen und damit die Drehposition bei Wiederstillstand zu beeinflussen. Indessen ist die hieraus resultierende Enddrehposition der Zapfwelle beim Wiederstillstand im Wesentlichen zufällig, da mit Betätigen eines Aktivierungsschalters des Steuergeräts für eine Inbetriebnahme der Zapfwelle aus Sicherheitsgründen ein Einrücken der Kupplung erst mit einer vorbestimmten Zeitverzögerung (in der Regel 2 sec) ausgelöst wird und auch das Ausrücken der Kupplung nicht so präzise erfolgt, dass die endgültige Drehposition der Zapfwelle vorherbestimmt werden kann.

Angesichts dieser Problematik ist es eine Aufgabe der vorliegenden Erfindung, eine Nebenantriebsvorrichtung der Getriebezapfwellenbauart bereit zu stellen, die eine höhere Funktionalität aufweist. Ein Ziel der Erfindung ist es dabei, insbesondere die Handhabbarkeit der Nebenantriebsvorrichtung beim An- und/oder Abkuppeln eines Zusatzaggregats zu verbessern.

Diese Aufgabe wird erfindungsgemäß durch eine Nebenantriebsvorrichtung mit den Merkmalen des Patentanspruchs 1 sowie ein Verfahren zum An- und/oder Abkoppeln eines Zusatzaggregats mit den Verfahrensschritten des Patentanspruchs 7 gelöst. Vorteilhafte Ausgestaltungen der Erfindung sind Gegenstand der Unteransprüche.

Der Kern der Erfindung besteht demzufolge darin, die Nebenantriebsvorrichtung eines mobilen Arbeitsgeräts mit einem elektronischen Steuergerät zur Betätigung einer zwischen einem Getriebe und einer Zapfwelle angeordneten Zapfwellenkupplung auszustatten, das mit einer Anflanschfunktionseinheit ausgebildet ist, die bei entsprechender Aktivierung (vorzugsweise manuell durch den Fahrer) eine Drehpositionskorrektur der Zapfwelle bezüglich der Antriebswelle ausführt. D.h. mit Betätigung der Anflanschfunktion führt die Zapfwelle eine vom Normalbetrieb unabhängige und ggf. auch unterschiedliche Drehbewegung aus, die dazu führt, dass das Keilwellen- oder Vielnutprofil der Zapfwelle um einige Grad gedreht wird (Drehschritt mit bestimmter Schrittweite). Auf diese Weise kann die Zapfwelle der Drehposition der Eingangswelle des Zusatzaggregats angepasst und der Ankuppel-/Abkuppelvorgang einfach ausgeführt werden.

Gemäß einem Aspekt der Erfindung bewirkt die Drehpositionskorrektur eine minimale Drehung der Zapfwelle mit bezüglich des Nenndrehmoments der Nebenantriebsvorrichtung stark eingeschränktem Drehmoment. D.h. dass insbesondere dann, wenn ein Abkuppelvorgang ausgelöst werden soll, die Drehbewegung der Zapfwelle nicht erneut zu einem Verspannen der Keilwellenverbindung führt. Dabei soll darauf hingewiesen sein, dass die Drehrichtung der Zapfwelle im Fall einer Drehpositionskorrektur vorzugsweise entgegengesetzt zur Drehrichtung der Zapfwelle im normalen Betrieb ist.

Ein weiterer Aspekt der Erfindung sieht vor, dass die Drehpositionskorrektur eine Drehung der Zapfwelle um einen Drehwinkel kleiner als die Teilung eines an der Zapfwelle ausgebildeten Keilwellenprofils ergibt. Dadurch wird sichergestellt, dass sich die beiden gegenüberliegenden Keilwellenprofile so ausrichten, dass deren Zähne versetzt zueinander zu liegen kommen und damit ein Ankuppeln möglich wird.

Um das Auslösen der Drehpositionskorrektur zu vereinfachen ist es vorzugsweise vorgesehen, einen externen Betätigungsschalter zum Aktivieren der Anflanschfunktionseinheit anzuordnen. Alternativ kann es aber auch sein, die Steuerung mit einem einzigen Schaltelement (Schalter) auszurüsten und das Auslösen der Drehpositionskorrektur in Abhängigkeit der Betätigungszeit des Schalters zu bewirken. D.h. beispielsweise eine kurze Betätigung bedeutet Drehpositionskorrektur und lange Betätigung bedeutet Normalbetrieb.

Gemäß einem anderen Aspekt der Erfindung wird ein Verfahren zum An- und/oder Abkoppeln einer Bearbeitungsmaschine an die Nebenantriebsvorrichtung eines mobilen Arbeitsgeräts als Energiequelle vorgeschlagen mit den Verfahrensschritten:
- Heranführen einer Antriebswelle der Bearbeitungsmaschine an das endseitige Keilwellenprofil einer Zapfwelle der Nebenantriebsvorrichtung ,
- Überprüfen der Relativdrehposition der Zapfwelle bezüglich der Antriebswelle der Bearbeitungsmaschine und
- wahlweises Auslösen einer Anflanschfunktion der Nebenantriebsvorrichtung in Abhängigkeit vom Prüfungsergebnis der Relativposition zur elektronisch gesteuerten Drehpositionskorrektur der Zapfwelle bezüglich der Antriebswelle.

Hierdurch wird zum Einen das An-/Abkuppeln eines Zusatzaggregats an/von der Zapfwelle vereinfacht und zum anderen wird für diese Tätigkeit kein zusätzliches Werkzeug mehr benötigt.

Die Erfindung wird nachstehend anhand eines bevorzugten Ausführungsbeispiels unter Bezugnahme auf die begleitenden Figuren näher erläutert.
Fig. 1 ist eine Prinzipdarstellung eines mobilen Arbeitsgeräts beispielsweise in Form eines Traktors, das mit einer erfindungsgemäßen Nebenantriebsvorrichtung gemäß einem bevorzugten Ausführungsbeispiel der Erfindung ausgestattet ist; und
Fig. 2 ist ein Systemschaubild der Betätigungseinrichtung einer Kupplung zum An-/Abkuppeln einer Getriebezapfwelle der erfindungsgemäßen Nebenantriebsvorrichtung an/ von einem Getriebe des mobilen Arbeitsgeräts.

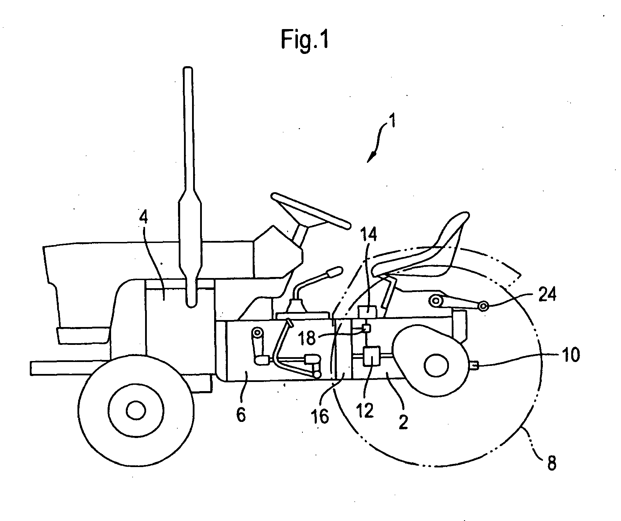

In Figur 1 ist ein mobiles Arbeitsgerät 1, beispielsweise in Form eines Traktors oder dergleichen landwirtschaftliches Fahrzeug gezeigt, das mit einer Nebenantriebsvorrichtung 2 gemäß einem bevorzugten Ausführungsbeispiel der Erfindung ausgerüstet ist.

Demzufolge hat das mobile Arbeitsgerät 1 einen Motor 4 sowie ein Getriebe 6, die miteinander zu einem Aufbaurahmen des Arbeitsgeräts verbunden sind. Der Antrieb des Arbeitsgeräts 1 erfolgt über Hinterräder 8, die mittels eines Antriebstrangs (nicht weiter dargestellt) mit dem Getriebe 6 des mobilen Arbeitsgeräts 1 verbunden sind.

Eine Nebenantriebswelle 10 dient zum Antrieb eines oder mehrerer Zusatzaggregate. Hierfür ist die Nebenantriebswelle 10 oder Zapfwelle über eine nur schematisch dargestellte Kupplung 12 mit dem Getriebe 6 des mobilen Arbeitsgeräts 1 verbindbar. Auch im vorliegenden Ausführungsbeispiel hat die Zapfwelle 10 zwei Eingriffsmöglichkeiten am Getriebe 6 derart, dass die Zapfwelle 10 mit zwei unterschiedlichen Drehzahlen wahlweise betrieben werden kann.

Ein schematisch dargestelltes elektrisches/elektronisches Steuergerät 14 ist an ein Hydrauliksystem 16 angeschlossen, über welches unter anderem die Zapfwellenkupplung 12 eingerückt und ausgerückt wird.

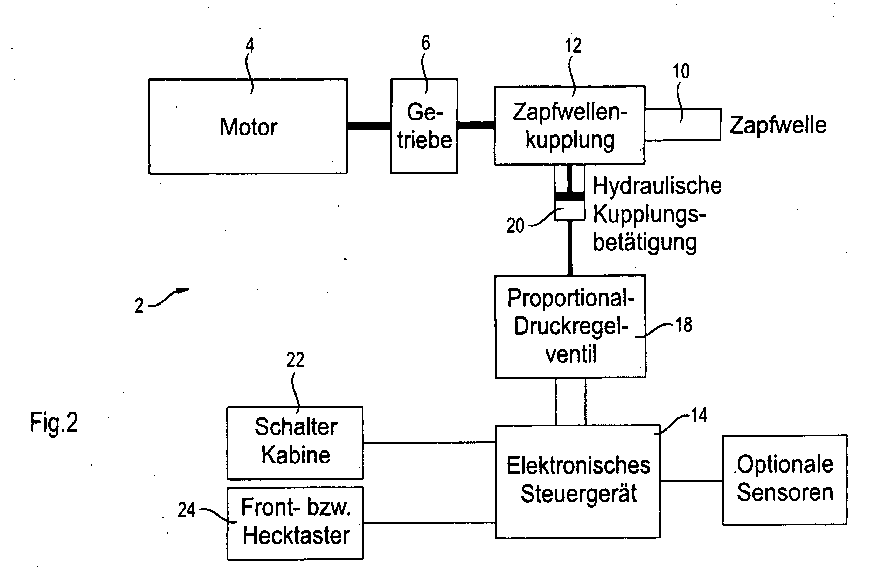

Der schematische Aufbau der Nebenantriebsvorrichtung 2 gemäß dem bevorzugten Ausführungsbeispiel der Erfindung ist in der Figur 2 dargestellt.

Wie aus der Figur 2 zu entnehmen ist, hat das Hydrauliksystem 16 u. a. ein Proportionaldruckregelventil 18, welches eine Druckmittelquelle (nicht weiter dargestellt) mit einer hydraulischen Kupplungsbestätigungseinrichtung 20 vorzugsweise in Form eines Hydraulikzylinders fluidverbinden kann. Je nach Schaltstellung des vorzugsweise elektromagnetisch betätigbaren Proportionaldruckregelventils 18 wird demzufolge die hydraulische Kupplungsbetätigung 20 mit einem Hydraulikfluid beaufschlagt, um die Zapfwellenkupplung 12 einzurücken oder die hydraulische Kupplungsbetätigung 20 (Hydraulikzylinder) wird mit einem ebenfalls nicht dargestelltem Druckmitteltankfluid verbunden, um ein Ausrücken der Zapfwellenkupplung 12 zu bewirken.

Das elektronische Steuergerät 14 ist über elektrische Leitungen mit dem elektromagnetisch betätigbaren Proportionaldruckregelventil 18 verbunden, um dieses im Ansprechen auf Schaltsignale zu betätigen, die von einem Fahrer des mobilen Arbeitsgeräts 1 über entsprechende Schalter dem elektronischen Steuergerät 14 eingegeben werden.

Hierfür ist am elektronischen Steuergerät 14 u. a. ein Kabinenschalter 22 vorgesehen, bei dessen Betätigung ein Inbetriebnahmesignal an das elektronische Steuergerät 14 ausgegeben wird, welches über das Proportionaldruckregelventil 18 ein Einrücken der Zapfwellenkupplung 12 für die Aufnahme eines Normalbetriebs der Nebenbetriebsvorrichtung 2 auslöst. In diesem Fall verbindet die Zapfwellenkupplung 12 die Zapfwelle 10 mit dem Getriebe 6 des mobilen Arbeitsgeräts 1, um ein Nenndrehmoment für den Normalbetrieb vom Getriebe 6 auf die Zapfwelle 10 zu übertragen.

Wird der Kabinenschalter 22 erneut betätigt, erhält das elektronische Steuergerät 14 ein Außerbetriebnahmesignal, worauf das elektronische Steuergerät 14 das elektromagnetische Proportionaldruckregelventil 18 derart ansteuert, dass dieses ein Ausrücken der Zapfwellenkupplung 12 auslöst, wodurch die Zapfwelle 10 vom Getriebe 6 getrennt wird.

Bei Wiederstillstand der Zapfwelle 10 nach Ausrücken der Zapfwellenkupplung 12 nimmt diese eine im Wesentlichen zufällige Drehposition ein. Soll demzufolge ein Zusatzaggregat in Form einer vorzugsweise landwirtschaftlichen Bearbeitungsmaschine an die Zapfwelle 10 angekuppelt werden, kann der nicht seltene Fall auftreten, dass die Zähne des Keilwellenprofils an der Zapfwelle 10 genau oder abschnittsweise auf die Zähne einer Antriebswelle des Zusatzaggregats treffen, so dass ein Ankuppeln des Antriebsaggregats in diesem Zustand unmöglich wird. Da ein manuelles Drehen der Zapfwelle 10 und/oder der Antriebswelle des Zusatzaggregats in der Regel nicht oder nur schwer möglich ist (zumeist unter Zuhilfenahme eines zusätzlichen Werkzeugs), ist der Ankuppelvorgang in der Regel kraftaufwendig und zeitintensiv.

Um diese Problematik zu vermeiden, ist an das elektronische Steuergerät 14 gemäß der Figur 2 ein zusätzlicher Front- bzw. Hecktaster 24 elektrisch angeschlossen. Dieser Front- bzw. Hecktaster 24 ist (elektrisch) parallel zu dem Kabinenschalter 22 angeordnet und wird dann betätigt, wenn ein vorstehend beschriebener Zustand, d.h., eine Drehposition 10 der Zapfwelle bezüglich der Antriebswelle des Zusatzaggregats erfasst wird, die ein einfaches Ankuppeln des Antriebsaggregats verhindert.

In diesem Fall kann der Front- bzw. Hecktaster 24 vorzugsweise manuell betätigt werden, worauf das elektronische Steuergerät 14 ein Drehpositionskorrektursignal von dem Front- bzw. Hecktaster 24 erhält. Dieses Drehpositionskorrektursignal aktiviert eine Anflanschfunktionseinheit innerhalb des elektronischen Steuergeräts 14, die im Ansprechen hierauf eine Drehpositionskorrektur der Zapfwelle 10 bezüglich der Antriebswelle des Zusatzaggregats ausführt.

In diesem Fall wird das elektromagnetische Proportionaldruckregelventil 18 vom elektronischen Steuergerät 14 so angesteuert, dass die Zapfwellenkupplung 12 nur über eine kurze Zeitspanne und vorzugsweise nur mit einer vorbestimmten Einrückkraft betätigt wird, die nur eine Drehmomentübertragung vom Getriebe 6 auf die Zapfwelle 10 unterhalb des Nenndrehmoments für den normalen Betrieb der Zapfwelle ermöglicht. In anderen Worten ausgedrückt wird die Zapfwellenkupplung 12 im Falle einer Drehpositionskorrektur durch die Anflanschfunktionseinheit des elektronischen Steuergeräts 14 über eine solche (kurze) Zeitspanne eingerückt, die eine Drehung der Zapfwelle 10 um wenige Grad bewirkt. Vorzugsweise wird hierbei die Zapfwelle 10 um einen Drehwinkel vorwärts (rückwärts) bewegt, der kleiner ist, als der Umfangsabstand zweier Zähne des an der Zapfwelle 10 ausgebildeten Keilwellenprofils (kleiner ist, als die Teilung des an der Zapfwelle 10 ausgebildeten Keilwellenprofils). Hierdurch wird demzufolge bei jeder Betätigung des Front- bzw. Hecktasters 24. die Zapfwelle 10 ruckartig um einige Grad gedreht, solange, bis das Keilwellenprofil der Zapfwelle 10 bezüglich des Keilwellenprofils der Eingangswelle des Zusatzaggregats so ausgerichtet ist, dass ein einfaches Ankuppeln des Zusatzaggregats an die Zapfwelle 10 ermöglicht wird.

Um die Anflanschfunktionseinheit auch dann einsetzen zu können, wenn beispielsweise beim Abkuppelvorgang des Zusatzaggregats von der Zapfwelle 10 ein Verspannen der Keilwellenverbindung festgestellt wird, die ein einfaches Abziehen der Eingangswelle des Zugangsaggregats von der Zapfwelle 10 verhindert, wird bei Auslösen der Drehpositionskorrektur durch die Anflanschfunktionseinheit das elektromagnetische Proportionaldruckregelventil 18 so betätigt, dass die Einrückkraft der Zapfwellenkupplung 12 deutlich kleiner ist, als die Einrückkraft für den Normalbetrieb der Nebenantriebsvorrichtung 2. In anderen Worten ausgedrückt, wird im Falle der Drehpositionskorrektur die Zapfwellenkupplung 12 so betätigt, dass ein deutlich geringeres Drehmoment vom Getriebe 6 auf die Zapfwelle 10 übertragbar ist, als im Normalbetrieb. Vorzugsweise wird die Zapfwellenkupplung mit maximal 20 % der Nennbetätigungskraft eingerückt, so dass kein nennenswertes Drehmoment über die Kupplung 12 auf die Zapfwelle 10 übertragbar ist. Hierdurch kann das Keilwellenprofil der Zapfwelle quasi drehmomentlos um ein geringes Maß gedreht werden, wodurch sich die Keilwellenverbindung zwischen der Zapfwelle 10 und der Eingangswelle des Zusatzaggregats entspannt und ein Lösen der Keilwellenverbindung möglich wird.

Der vorstehend beschriebene Vorgang setzt eine visuelle Erfassung der Relativdrehposition der Zapfwelle 10 bezüglich der Antriebswelle des Zusatzaggregats voraus, die im einfachsten Fall von der Bedienperson des mobilen Arbeitsgeräts 1 geleistet werden kann. Optional ist es aber auch möglich im Bereich der Zapfwelle 10 und insbesondere des Keilwellenprofils einen oder mehrere Sensoren anzuordnen, die eine ungünstige Drehlage der Zapfwelle 10 bezüglich der Eingangswelle des Zusatzaggregat erfallen und quasi automatisch ohne Betätigung des Front- bzw. Hecktasters 24 eine Drehpositionskorrektur einleiten. Darüber hinaus kann die Nebenantriebsvorrichtung 2 gemäß der Erfindung optional mit Sicherungseinrichtungen versehen sein, die verhindern, dass ein unbeabsichtigtes Betätigen des Front- bzw. Hecktasters 24 zur Durchführung einer Drehpositionskorrektur führt. Beispielsweise kann ein Sensor vorgesehen sein, der die Drehzahl des Motors 4 erfasst und ein Drehpositionskorrektur-Freigabesignal an das elektronische Steuergerät 14 nur dann ausgibt, wenn dieser Sensor eine Leerlaufdrehzahl des Motors 4 erkennt. Ferner kann am Front- bzw. Hecktaster 24 ein weiterer Sensor angeordnet sein, der die Betätigungszeit des Front- bzw. Hecktasters 24 misst und hieraus eine ggf. unbeabsichtigte Betätigung erkennt. Beispielsweise kann dieser Sensor so eingestellt sein, dass ein Drehpositionskorrektur-Freigabesignal von diesem Sensor nur dann ausgegeben wird, wenn der Front- bzw. Hecktaster 24 nach einer bestimmten Betätigungszeit (beispielsweise 100ms) wieder losgelassen wird. Die genannten Sensoren der Sicherungseinrichtung können wahlweise einzeln oder in Kombination in der Nebenantriebsvorrichtung 2 gemäß der Erfindung angeordnet sein.

Grundsätzlich kann die erfindungsgemäße Nebenantriebsvorrichtung 2 in allen Arten von mobilen Arbeitsgeräten und insbesondere im landwirtschaftlichen Bereich genutzt werden.

Offenbart wird eine Nebenantriebsvorrichtung eines mobilen Arbeitsgeräts mit einem elektronischen Steuergerät 14 zur Betätigung einer zwischen einem Getriebe 6 und einer Zapfwelle 10 angeordneten Zapfwellenkupplung 12, wobei das Steuergerät 14 erfindungsgemäß mit einer Anflanschfunktionseinheit ausgebildet ist, die bei Aktivierung eine Drehpositionskorrektur der Zapfwelle 10 bezüglich der Antriebswelle ausführt. Des Weiteren wird ein Verfahren zum An- und/oder Abkoppeln einer Bearbeitungsmaschine an die Nebenantriebsvorrichtung 2 eines mobilen Arbeitsgeräts 1 als Energiequelle vorgeschlagen mit den Verfahrensschritten:
- Heranführen einer Antriebswelle der Bearbeitungsmaschine an das endseitige Keilwellenprofil einer Zapfwelle 10 der Nebenantriebsvorrichtung 2,
- Überprüfen der Relativdrehposition der Zapfwelle 10 bezüglich der Antriebswelle der Bearbeitungsmaschine und
- wahlweises Auslösen einer Anflanschfunktion der Nebenantriebsvorrichtung 2 in Abhängigkeit vom Prüfungsergebnis der Relativposition zur elektronisch gesteuerten Drehpositionskorrektur der Zapfwelle 10 bezüglich der Antriebswelle.

### Bezugszeichenliste:

- 1: mobiles Arbeitsgerät
- 2: Nebenantriebsvorrichtung
- 4: Motor
- 6: Getriebe
- 8: Hinterräder
- 10: Zapfwelle
- 12: Zapfwellenkupplung
- 14: Steuergerät
- 16: Hydrauliksystem
- 18: Proportionaldruckregelventil
- 20: Kupplungsbetätigungseinrichtung
- 22: Kabinenschalter
- 24: Front- bzw. Hecktaster

## Patentansprüche

1. Nebenantriebsvorrichtung der Getriebenzapf wellen bauart eines mobilen Arbeitsgeräts (1), mit einem elektronischen Steuergerät (14) zur Betätigung einer zwischen einem Getriebe (6) und einer Zapfwelle (10) angeordneten Zapfwellenkupplung (12), **dadurch gekennzeichnet, dass** das Steuergerät (14) mit einer Anflanschfunktionseinheit ausgebildet ist, die bei Aktivierung eine Drehpositionskorrektur der Zapfwelle (10) bezüglich einer Antriebswelle eines Zusatzaggregats ausführt.

2. Nebenantriebsvorrichtung nach Anspruch 1 **dadurch gekennzeichnet, dass** die Anflanschfunktionseinheit eine minimale Drehung der Zapfwelle (10) mit bezüglich des Nenndrehmoments der Nebenantriebsvorrichtung (2) stark eingeschränktem Drehmoment bewirkt.

3. Nebenantriebsvorrichtung nach einem der Ansprüche 1 oder 2, **dadurch gekennzeichnet, dass** die Drehpositionskorrektur eine Drehung der Zapfwelle (10) um einen Drehwinkel kleiner als die Teilung eines an der Zapfwelle (10) ausgebildeten Keilwellenprofils vorsieht.

4. Nebenantriebsvorrichtung nach einem der Ansprüche 1 bis 3, **gekennzeichnet durch** einen externen Betätigungsschalter (24) zum Aktivieren der Anflanschfunktionseinheit.

5. Nebenantriebsvorrichtung nach einem der vorstehenden Ansprüche, **dadurch gekennzeichnet, dass** die Anflanschfunktionseinheit die Zapfwellenkupplung (12) mit einer Betätigungsenergie ansteuert, die max. 20% der Nennbetätigungsenergie beträgt.

6. Nebenantriebsvorrichtung nach einem der vorstehenden Ansprüche, **gekennzeichnet durch** einen Sensor zur Erfassung der Drehzahl eines Antriebsmotors (4) des Arbeitsgeräts (1), der an das Steuergerät (14) angeschlossen ist, wobei die Anflanschfunktionseinheit nur dann aktivierbar ist, wenn der Sensor ein Leerlaufdrehzahlsignal an das Steuergerät (14) abgibt.

7. Verfahren zum An- und/oder Abkoppeln einer Bearbeitungsmaschine als Zusatzaggregat an die Nebenantriebsvorrichtung (2) der Getriebezapfwellenbauart eines mobilen Arbeitsgeräts (1) als Energiequelle mit den Verfahrensschritten:
- Heranführen einer Antriebswelle der Bearbeitungsmaschine an das endseitige Keilwellenprofil einer Zapfwelle (10) der Nebenantriebsvorrichtung (2),
- Überprüfen der Relativdrehposition der Zapfwelle (10) bezüglich der Antriebswelle der Bearbeitungsmaschine und
- wahlweises Auslösen einer Anflanschfunktion der Nebenantriebsvorrichtung (2) in Abhängigkeit vom Prüfungsergebnis der Relativposition zur elektronisch gesteuerten Drehpositionskorrektur der Zapfwelle (10) bezüglich der Antriebswelle.

8. Verfahren nach Anspruch 7, **gekennzeichnet durch** die weiteren Verfahrensschritte:
- Erfassen der Drehzahl eines Antriebsmotors (4) des mobilen Arbeitsgeräts (1) und
- Zulassen eines Auslösens der Anflanschfunktion nur dann, wenn der Antriebsmotor (4) in einer Leerlaufdrehzahl betrieben wird.

9. Verfahren nach Anspruch 7 oder 8, **gekennzeichnet durch** den weiteren Verfahrensschritt:
- Betätigen einer Kupplung (12) zwischen der Zapfwelle (10) und einem Antriebsmotorgetriebe (6) des Arbeitsgeräts (1) mit einer Betätigungsenergie, die kleiner ist als die Nennbetätigungsenergie der Kupplung (12).

10. Verfahren nach Anspruch 9, **dadurch gekennzeichnet, dass** die Betätigung der Kupplung (12) mit einer Betätigungsenergie von max. 20% der Nennbetätigungsenergie erfolgt.

## Claims

1. Power take-off device of the transmission take-off shaft type of a mobile working machine (1), with an electronic control apparatus (14) for actuating a take-off shaft clutch (12) arranged between a transmission (6) and a take-off shaft (10), **characterized in that** the control apparatus (14) is designed with a functional flanging unit which, when activated, makes a correction of the rotary position of the take-off shaft (10) with respect to a drive shaft of an additional assembly.

2. Power take-off device according to Claim 1, **characterized in that** the functional flanging unit causes minimum rotation of the take-off shaft (10) with a torque greatly restricted in relation to the nominal torque of the power take-off device (2).

3. Power take-off device according to either one of Claims 1 and 2, **characterized in that** the correction of the rotary position provides for a rotation of the take-off shaft (10) by an angle of rotation smaller than the division of a splined shaft profile formed on the take-off shaft (10).

4. Power take-off device according to one of Claims 1 to 3, **characterized by** an external actuating switch (24) for activating the functional flanging unit.

5. Power take-off device according to one of the preceding claims, **characterized in that** the functional flanging unit activates the take-off shaft clutch (12) with an actuation energy which amounts to a maximum of 20% of the nominal actuation energy.

6. Power take-off device according to one of the preceding claims, **characterized by** a sensor for detecting the rotational speed of an engine (4) of the working machine (1), which sensor is connected to the control apparatus (14), the functional flanging unit being activatable only when the sensor emits an idling rotational speed signal to the control apparatus (14).

7. Method for coupling and/or uncoupling a processing machine as an additional assembly to the power take-off device (2) of the transmission take-off shaft type of a mobile working machine (1) as an energy source, with the method steps:
- offering of a drive shaft of the processing machine to the end-face splined shaft profile of a take-off shaft (10) of the power take-off device (2),
- checking of the relative rotary position of the take-off shaft (10) in relation to the drive shaft of the processing machine, and
- selectively triggering a flanging function of the power take-off device (2) in dependence on the result of checking the relative position for the electronically controlled correction of the rotary position of the take-off shaft (10) with respect to the drive shaft.

8. Method according to Claim 7, **characterized by** the further method steps:
- detecting the rotational speed of an engine (4) of the mobile working machine (1), and
- permitting a triggering of the flanging function only when the engine (4) is operated at an idling rotational speed.

9. Method according to Claim 7 or 8, **characterized by** the further method step:
- actuating a clutch (12) between the take-off shaft (10) and an engine transmission (6) of the working machine (1) with an actuation energy which is lower than the nominal actuation energy of the clutch (12).

10. Method according to Claim 9, **characterized in that** the actuation of the clutch (12) takes place with an actuation energy of a maximum of 20% of the nominal actuation energy.

## Revendications

1. Dispositif d'entraînement auxiliaire du type arbre de prise de force de transmission d'un engin de travail mobile (1), comprenant un appareil de commande électronique (14) pour l'actionnement d'un embrayage d'arbre de prise de force (12) disposé entre une transmission (6) et un arbre de prise de force (10), **caractérisé en ce que** l'appareil de commande (14) est réalisé avec une unité fonctionnelle de bridage qui, lors de l'activation, effectue une correction de la position de rotation de l'arbre de prise de force (10) par rapport à un arbre d'entraînement d'une unité supplémentaire.

2. Dispositif d'entraînement auxiliaire selon la revendication 1, **caractérisé en ce que** l'unité fonctionnelle de bridage cause une rotation minimale de l'arbre de prise de force (10) avec un couple fortement réduit par rapport au couple nominal du dispositif d'entraînement auxiliaire (2).

3. Dispositif d'entraînement auxiliaire selon l'une quelconque des revendications 1 ou 2, **caractérisé en ce que** la correction de la position de rotation prévoit une rotation de l'arbre de prise de force (10) suivant un angle de rotation inférieur à la division d'un profil d'arbre cannelé réalisé sur l'arbre de prise de force (10).

4. Dispositif d'entraînement auxiliaire selon l'une quelconque des revendications 1 à 3, **caractérisé par** un interrupteur d'actionnement externe (24) pour activer l'unité fonctionnelle de bridage.

5. Dispositif d'entraînement auxiliaire selon l'une quelconque des revendications précédentes, **caractérisé en ce que** l'unité fonctionnelle de bridage commande l'embrayage d'arbre de prise de force (12) avec une énergie d'actionnement qui vaut au maximum 20 % de l'énergie d'actionnement nominale.

6. Dispositif d'entraînement auxiliaire selon l'une quelconque des revendications précédentes, **caractérisé par** un capteur pour détecter la vitesse de rotation d'un moteur d'entraînement (4) de l'engin de travail (1) qui est raccordé à l'appareil de commande (14), l'unité fonctionnelle de bridage ne pouvant être activée que lorsque le capteur fournit un signal de vitesse de rotation de marche à vide à l'appareil de commande (14).

7. Procédé pour accoupler et/ou désaccoupler une machine d'usinage en tant qu'unité supplémentaire au dispositif d'entraînement auxiliaire (2) du type arbre de prise de force de transmission d'un engin de travail mobile (1) en tant que source d'énergie, comprenant les étapes de procédé suivantes :
- rapprochement d'un arbre d'entraînement de la machine d'usinage du profil d'arbre cannelé du côté de l'extrémité d'un arbre de prise de force (10) du dispositif d'entraînement auxiliaire (2),
- vérification de la position de rotation relative de l'arbre de prise de force (10) par rapport à l'arbre d'entraînement de la machine d'usinage et
- déclenchement sélectif d'une fonction de bridage du dispositif d'entraînement auxiliaire (2) en fonction du résultat du contrôle de la position relative en vue d'une correction de la position de rotation commandée électroniquement de l'arbre de prise de force (10) par rapport à l'arbre d'entraînement.

8. Procédé selon la revendication 7, **caractérisé par** les étapes de procédé supplémentaires suivantes :
- détection de la vitesse de rotation d'un moteur d'entraînement (4) de l'engin de travail mobile (1) et
- autorisation d'un déclenchement de la fonction de bridage uniquement lorsque le moteur d'entraînement (4) fonctionne à une vitesse de rotation de marche à vide.

9. Procédé selon la revendication 7 ou 8, **caractérisé par** l'étape de procédé supplémentaire suivante :
- actionnement d'un embrayage (12) entre l'arbre de prise de force (10) et une transmission du moteur d'entraînement (6) de l'engin de travail (1) avec une énergie d'actionnement qui est inférieure à l'énergie d'actionnement nominale de l'embrayage (12).

10. Procédé selon la revendication 9, **caractérisé en ce que** l'actionnement de l'embrayage (12) s'effectue avec une énergie d'actionnement de 20 % maximum de l'énergie d'actionnement nominale.
